# EUROPÄISCHE PATENTSCHRIFT

(11) **EP 1 179 258 B1**
(45) Veröffentlichungstag und Bekanntmachung des Hinweises auf die Patenterteilung: **26.10.2005**
(21) Anmeldenummer: 00943578.5
(22) Anmeldetag: 12.05.2000
(51) Int. Cl.: H04M 3/56, H04M 3/58, H04Q 3/00

(54) **WEGERSETZUNG BEI UMWANDLUNG EINER DREIERFERNMELDEVERBINDUNG IN EINE ZWEIERFERNMELDEVERBINDUNG**
PATH REPLACEMENT DURING THE CONVERSION OF A THREE-PARTY TELECOMMUNICATIONS CONNECTION INTO A TWO-PARTY TELECOMMUNICATIONS CONNECTION
REMPLACEMENT D'ITINERAIRE LORS DE LA CONVERSION D'UNE LIAISON TELEPHONIQUE A TROIS ABONNES EN UNE LIAISON TELEPHONIQUE A DEUX ABONNES

(30) Priorität: 17.05.1999 DE 19922554
(43) Veröffentlichungstag der Anmeldung: 13.02.2002
(73) Patentinhaber: SIEMENS AKTIENGESELLSCHAFT, 80333 München (DE)
(72) Erfinder: KREMBS, Bernhard, D-82031 Grünwald (DE); HENZ, Volker, D-85764 Oberschleissheim (DE)
(86) Internationale Anmeldenummer: PCT/DE2000/001505
(87) Internationale Veröffentlichungsnummer: WO 2000/070852

(56) Entgegenhaltungen:
- DE-A- 19 653 622

## Beschreibung

Die Erfindung betrifft ein Verfahren zur Umwandlung einer über ein öffentliches Kommunikationsnetz vermittelten Dreierfernmeldeverbindung zwischen zwei Teilnehmeranschlüssen und einem weiteren Teilnehmeranschluß oder zwischen zwei Teilnehmeranschlüssen und einem Vermittlungsplatz in eine Zweierfernmeldeverbindung zwischen den zwei genannten Teilnehmeranschlüssen gemäß dem Oberbegriff des Patentanspruchs 1. Dabei führt die Dreierfernmeldeverbindung über die Fernmeldevermittlungsstelle, an die der weitere Teilnehmeranschluß oder der Vermittlungsplatz angeschlossen ist.

In bekannter Weise geschieht die Umwandlung einer Dreierfernmeldeverbindung in eine Zweierfernmeldeverbindung dadurch, daß die Teilverbindung der Dreierfernmeldeverbindung zwischen dem weiteren Teilnehmeranschluß oder dem Vermittlungsplatz und seiner Fernmeldevermittlungsstelle ausgelöst wird. Das bekannte Verfahren wird z. B. in dem Fall angewendet, daß ein Teilnehmer des Telekommunikationsnetzes, z. B. ein Bankkunde, eine Verbindung zu einem Bankmitarbeiter seiner Bankfiliale herstellen möchte. Der Verbindungsaufbau zu dem Bankmitarbeiter läuft beispielsweise wie folgt ab:

Der Bankkunde baut eine Verbindung von seiner Teilnehmerendeinrichtung zu seiner Ortsvermittlungsstelle, z. B. in München, auf. Von dieser Ortsvermittlungsstelle wird aufgrund einer in der Ortsvermittlungsstelle eingerichteten Anrufumleitung eine Verbindung zu einer weiteren Fernmeldevermittlungsstelle, z. B. in Hamburg, geschaltet, an die mehrere Vermittlungsplätze, z. B. eines Callcenters, angeschlossen sind. Die Verbindung wird schließlich von der in Hamburg stehenden Fernmeldevermittlungsstelle zu einem Vermittlungsplatz geschaltet. Eine Vermittlungsperson an dem Vermittlungsplatz sucht daraufhin die Rufnummer des vom Bankkunden gewünschten Bankmitarbeiters heraus und initiiert einen Verbindungsaufbau von der in Hamburg stehenden Fernmeldevermittlungsstelle zu derselben Ortsvermittlungsstelle in München oder einer anderen Ortsvermittlungsstelle, mit der die einzelnen Teilnehmeranschlüsse der Bankmitarbeiter verbunden sind. Von dieser Ortsvermittlungsstelle wird die Verbindung schließlich zum gewünschten Bankmitarbeiter durchgeschaltet. Nach erfolgreichem Verbindungsaufbau vom Bankkunden zum gewünschten Bankmitarbeiter veranlaßt die Vermittlungsperson die Umwandlung in eine Zweierfernmeldeverbindung, wobei der Vermittlungsplatz aus der Verbindung herausgelöst wird.

Das bekannte Verfahren wird auch auf den Fall einer Konferenzschaltung angewendet. Hierzu ruft der Bankkunde beispielsweise einen Bankmitarbeiter einer Bankzentrale in Hamburg an. Dieser Bankmitarbeiter stellt dann eine Dreierkonferenz zu einem weiteren Bankmitarbeiter einer Bankfiliale, z.B. in München, her. Nach einer gewissen Gesprächsdauer löst sich der Bankmitarbeiter der Bankzentrale aus der Dreierkonferenz heraus und veranlaßt in seiner Ortsvermittlungsstelle in Hamburg das Zusammenschalten der Teilverbindung zwischen dem Bankkunden und der Fernmeldevermittlungsstelle in Hamburg und der Teilverbindung zwischen der Fernmeldevermittlungsstelle in Hamburg und dem Bankmitarbeiter der Bankfiliale in München. Auf diese Weise bleibt eine Zweierverbindung zwischen dem Bankkunden und dem Bankmitarbeiter der Filiale in München bestehen.

Bei dem bekannten Verfahren entsteht für die Bank jedoch der Nachteil, daß sie im Falle der Anrufumleitung zu einem Vermittlungsplatz, z.B. in Hamburg, die bestehende Fernverbindung zwischen der Ortsvermittlungsstelle in München und der Fernmeldevermittlungsstelle in Hamburg bezahlen muß, obwohl nach dem Herauslösen des Vermittlungsplatzes aus der Dreierverbindung nur noch eine Gesprächsverbindung mit dem Bankmitarbeiter der Münchner Bankfiliale besteht. Im Falle der Anrufweitergabe durch den Bankmitarbeiter der Bankzentrale muß der Bankkunde die Gebühren der Fernverbindungen zwischen seiner Ortsvermittlungsstelle und der Fernmeldevermittlungsstelle in Hamburg sowie zwischen der Fernvermittlungsstelle in Hamburg und der für die Bankfiliale zuständigen Ortsvermittlungsstelle z.B. in München tragen.

Des weiteren werden für die Fernverbindungen über die Fernmeldevermittlungsstelle in Hamburg zusätzliche Ressourcen, z.B. in Form von Kanalbelegungen auf den Verbindungsleitungen bzw. bezüglich des Vermittlungsvorganges, in der Fernmeldevermittlungsstelle selbst verbraucht.

Es ist bereits ein Verfahren zur Durchführung eines Verbindungsaufbaus bei Anrufumleitung bzw. Verbindungsweiterleitung in einem Konununikationsnetz bekannt (DE 196 53 622 A1). Dabei wird bei einem Ruf von einer Teilnehmerstelle eines ersten Kommunikationssystems zu einer einem zweiten Kommunikationssystem zugeordneten Teilnehmerstelle, für die eine Anrufumleitung oder an der eine Rufweiterleitung zu einer Teilnehmerstelle eines dritten Kommunikationssystems eingerichtet bzw. veranlaßt wird, über das zweite Kommunikationssystem zunächst eine Verbindung zum dritten Kommunikationssystem aufgebaut. Von diesem dritten Kommunikationssystem wird daraufhin eine Wegeersetzungsanfrage an das rufende, erste Kommunikationssystem übermittelt, woraufhin dieses einen alternativen Verbindungsweg (unter Umgehung des zweiten Kommunikationssystems) ermittelt und das dritte Kommunikationssystem zum Wechsel auf den alternativen Verbindungsweg veranlaßt. Eine solche Vorgehensweise eignet sich jedoch nicht ohne weiteres, um die oben beschriebene Dreierfernmeldeverbindung in eine Zweierfernmeldeverbindung zu überführen.

Die Aufgabe der Erfindung besteht nun darin, ein Verfahren der eingangs angegebenen Art dahingehend auszugestalten, dass die vorstehend erläuterten Nachteile beseitigt werden.

Diese Aufgabe wird durch die im Kennzeichen des Anspruchs 1 angegebenen Merkmale gelöst. Weitere Ausgestaltungen der Erfindung sind in Unteransprüchen gekennzeichnet.

Das Prinzip der Erfindung besteht darin, dass die Fernmeldevermittlungsstelle, über die die Dreierfernmeldeverbindung zwischen den zwei Teilnehmeranschlüssen, z.B. dem Teilnehmeranschluss des eingangs genannten Bankkunden und dem Teilnehmeranschluss des eingangs genannten Bankmitarbeiters in der Bankfiliale, und einem weiteren Teilnehmeranschluß, z. B. des Bankmitarbeiters in der Bankzentrale, oder einem Vermittlungsplatz, z.B. eines Callcenters, aufgebaut ist, eine Aufforderung von dem weiteren Teilnehmeranschluß oder von dem Vermittlungsplatz erhält und daraufhin den Aufbau einer neuen direkten Fernmeldeverbindung zwischen den zwei genannten Teilnehmeranschlüssen (z.B. Bankkunde und Bankmitarbeiter in der Bankfiliale) dadurch einleitet, dass die mit dem weiteren Teilnehmeranschluß oder dem Vermittlungsplatz verbundene Fernmeldevermittlungsstelle die eine oder eine der beiden Fernmeldevermittlungsstellen, an die die zwei genannten Teilnehmeranschlüsse angeschlossen sind, zum Aufbau der neuen Fernmeldeverbindung entsprechend einer Auswahl auffordert, die in Abhängigkeit von dem der Vergebührung zugrundegelegten Tarifmodell getroffen wird. Außerdem werden nach erfolgreichem Aufbau der direkten Fernmeldeverbindung die bestehenden Teilverbindungen der Dreierfernmeldeverbindung zwischen diesen beiden Teilnehmeranschlüssen und dem weiteren Teilnehmeranschluß oder dem Vermittlungsplatz abgebaut. Auf diese Weise können die Teilnehmer festlegen, ob nun der ursprünglich rufende Teilnehmer die Gebühren für die neue direkte Fernmeldeverbindung übernimmt oder ob der ursprünglich gerufene Teilnehmer die Gebühren für die neue direkte Fernmeldeverbindung übernimmt, die dann von seiner Fernmeldevermittlungsstelle aus aufgebaut wird.

Demnach werden Ressourcen, z.B. in Form von Kanalbelegungen auf Übertragungsleitungen bzw. bezüglich von Vermittlungsvorgängen, in der Fernmeldevermittlungsstelle, an die der weitere Teilnehmer oder der Vermittlungsplatz angeschlossen ist, eingespart.

Für den Teilnehmer z.B. die eingangs erwähnte Bank, der den Vermittlungsdienst durch einen Vermittlungsplatz z.B. eines Callcenters in Anspruch nimmt, bzw. für den rufenden Teilnehmer im Falle der genannten Dreierkonferenz ergibt sich der angenehme Nutzen, dass beide nach der Umwandlung der Dreierfernmeldeverbindung in die Zweierfernmeldeverbindung nur die Gebühren für die direkte Fernmeldeverbindung zum gerufenen Teilnehmer bezahlen müssen.

Eine Weiterbildung der Erfindung gibt eine Alternative insofern an, als dass die zwei Teilnehmeranschlüsse, zwischen denen eine neue direkte Fernmeldeverbindung aufgebaut wird, an eine gemeinsame Fernmeldevermittlungsstelle angeschlossen sind. Hierbei muß die neue direkte Fernmeldeverbindung lediglich in der gemeinsamen Fernmeldevermittlungsstelle geschaltet werden. Außerdem bezahlt der rufende bzw. den Vermittlungsdienst in Anspruch nehmende Teilnehmer in diesem Fall nur Gebühren nach dem Ortstarif.

Gemäß einer weiteren Weiterbildung der Erfindung erhält die zum Aubau der neuen Fernmeldeverbindung aufgeforderte Fernmeldevermittlungsstelle von der die neue Fernmeldeverbindung annehmenden Fernmeldevermittlungsstelle, an die der zweite gerufene Teilnehmeranschluß der zwei genannten Teilnehmeranschlüsse angeschlossen ist, ein eindeutiges Rufkennzeichen und/oder die Rufnummer des zweiten Teilnehmeranschlusses. Somit wird die neue direkte Fernmeldeverbindung vor dem Verbindungsaufbau eindeutig identifiziert, wodurch auch eine korrekte Nutzkanalumschaltung in der die neue Fernmeldeverbindung initiierenden Fernmeldevermittlungsstelle und der die neue Fernmeldeverbindung annehmenden Fernmeldevermittlungsstelle gewährleistet wird. Außerdem kann in der Teilnehmerendeinrichtung des rufenden Teilnehmers dadurch die korrekte Rufnummer des gerufenen Teilnehmers der Zweierfernmeldeverbindung angezeigt werden.

Nachstehend wird ein Ausführungsbeispiel der Erfindung unter Bezugnahme auf eine Zeichnung näher erläutert.

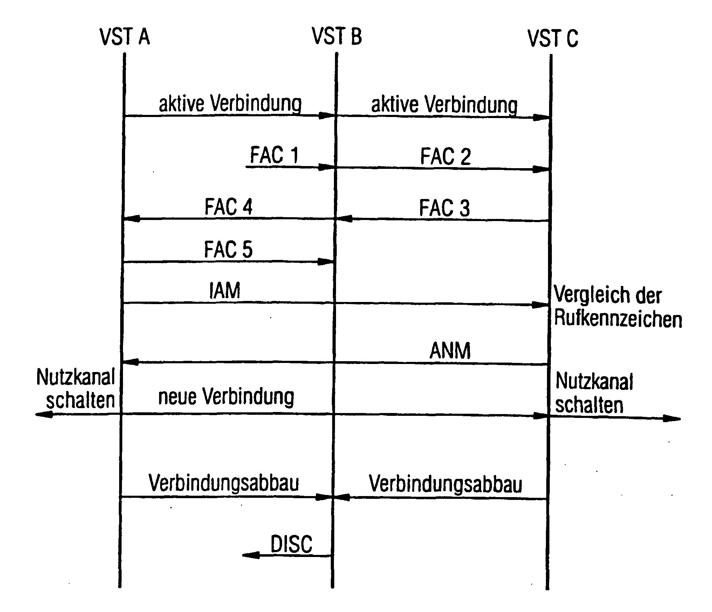

Die Figur zeigt ein beispielhaftes Ablaufdiagramm zum erfindungsgemäßen Verfahren. Es wird dargestellt:

Eine Fernmeldevermittlungsstelle VST A, eine Fernmeldevermittlungsstelle VST B und eine Fernmeldevermittlungsstelle VST C. An die Fernmeldevermittlungsstelle VST A ist sich der Teilnehmeranschluß des rufenden Teilnehmers, z. B. des Bankkundens, und an die Fernmeldevermittlungsstelle VST C der Teilnehmeranschluß des gerufenen Teilnehmers, z. B. des Bankmitarbeiters der Bankfiliale, angeschlossen vorzustellen. Ein weiterer Teilnehmeranschluß eines Teilnehmers, z. B. des Bankmitarbeiters in der Bankzentrale, oder ein Vermittlungsplatz, z. B. eines Callcenters, sind sich mit der Fernmeldevermittlungsstelle VST B verbunden zu denken.

Es sei angenommen, zwischen dem Teilnehmeranschluß der Fernmeldevermittlungsstelle VST A, dem Teilnehmeranschluß oder dem Vermittlungsplatz der Fernmeldevermittlungsstelle VST B und dem Teilnehmeranschluß der Fernmeldevermittlungsstelle VST C bestehe eine aktive Dreierfernmeldeverbindung. Das Leistungsmerkmal der Umwandlung der Dreierfernmeldeverbindung in eine Zweierfernmeldeverbindung wird dann mittels einer Nachricht FAC1 (FAC = Feature activation) in der Vermittlungsstelle VST B aktiviert. Die Fernmeldevermittlungsstelle VST B informiert daraufhin durch die Nachricht FAC2 die Fernmeldevermittlungsstelle VST C darüber, daß die Umwandlung der Dreierfernmeldeverbindung aktiviert wurde. In diesem Fall bezahlt der Teilnehmer, dessen Teilnehmeranschluß an die Fernmeldevermittlungsstelle VST A angeschlossen ist, die Gebühr der neu aufzubauenden direkten Fernmeldeverbindung zwischen den Fernmeldevermittlungsstellen VST A und VST C.

Für den Fall, daß der Teilnehmer, dessen Teilnehmeranschluß an die Fernmeldevermittlungsstelle VST C angeschlossen ist, die Gebühr übernehmen soll, kann auch die Fernmeldevermittlungsstelle VST A mit FAC2 über die Umwandlung informiert werden. Der folgende Ablauf des erfindungsgemäßen Verfahrens ist dann so vorzustellen, als ob in der Figur die Bezugszeichen VST A und VST C vertauscht wären.

Die Fernmeldevermittlungsstelle VST C übermittelt in der Nachricht FAC3 ein eindeutiges Rufkennzeichen zusammen mit der Rufnummer des an sie angeschlossenen Teilnehmeranschlusses an die Fernmeldevermittlungsstelle VST B, die an die Fernmeldevermittlungsstelle VST A eine das Rufkennzeichen und die Rufnummer beinhaltende Aufforderungsnachricht FAC 4 weiterleitet, eine neue direkte Fernmeldeverbindung anhand der mitgeteilten Rufnummer zur Fernmeldevermittlungsstelle VST C aufzubauen. Den Empfang der Nachricht FAC4 bestätigt die Fernmeldevermittlungsstelle VST A durch die Nachricht FAC5 an die Fernmeldevermittlungsstelle VST B. Der Aufbau der neuen Fernmeldeverbindung wird mittels der Nachricht IAM (Initial Address Message) an die Fernmeldevermittlungsstelle VST C signalisiert. Diese Nachricht enthält auch das von der Fernmeldevermittlungsstelle VST C vergebene Rufkennzeichen. In der Fernmeldevermittlungsstelle VST C wird nun das in der Nachricht IAM mitgeteilte Rufkennzeichen mit den Rufkennzeichen sämtlicher in der Fernmeldevermittlungsstelle VST C aktiv geschalteten Verbindungen verglichen. Nach der Ermittlung der Teilverbindung zwischen der Fernmeldevermittlungsstelle VST B und dem an die Fernmeldevermittlungsstelle VST C angeschlossenen Teilnehmeranschluß bzw. Vermittlungsplatz antwortet die Fernmeldevermittlungsstelle VST C mit der Nachricht ANM (Anwser Message) an die Fernmeldevermittlungsstelle VST A.

Für den Fall, daß die Fernmeldevermittlungsstelle VST C keine Verbindung mit identischem Rufkennzeichen auffinden konnte, wird der Vorgang zum Aufbau der neuen direkten Fernmeldeverbindung zur Fernmeldevermittlungsstelle VST C abgebrochen.

Sobald die Fernmeldevermittlungsstelle VST A die Nachricht ANM erhalten hat, wird die neue direkte Fernmeldeverbindung zur Fernmeldevermittlungsstelle VST C durchgeschaltet. Zugleich werden der Nutzkanal der aktiven Teilverbindung zwischen dem an die Fernmeldevermittlungsstelle VST A angeschlossenen Teilnehmeranschluß und der Fernmeldevermittlungsstelle VST A sowie der Nutzkanal der aktiven Teilverbindung zwischen dem an die Fernmeldevermittlungsstelle VST C angeschlossenen Teilnehmeranschluß und der Fernmeldevermittlungsstelle VST C jeweils auf den Nutzkanal der neu aufgebauten Fernmeldeverbindung durchgeschaltet. Anschließend wird von der Fernmeldevermittlungsstelle VST A die Teilverbindung zur Fernmeldevermittlungsstelle VST B sowie von der Fernmeldevermittlungsstelle VST C die Teilverbindung zur Fernmeldevermittlungsstelle VST B abgebaut und somit die belegten Ressourcen freigegeben. Mittels der Nachricht DISC wird auch das Auslösen der Teilverbindung zwischen der Fernmeldevermittlungsstelle VST B und dem an diese Fernmeldevermittlungsstelle angeschlossenen Teilnehmeranschluß eingeleitet.

Wenn im Verfahren aufgrund eines Fehlers der Aufbau der neuen direkten Fernmeldeverbindung fehlschlägt, werden die bestehenden Teilverbindungen zwischen der Fernmeldevermittlungsstelle VST A und der Fernmeldevermittlungsstelle VST B sowie zwischen der Fernmeldevermittlungsstelle VST B und der Fernmeldevermittlungsstelle VST C aufrecht gehalten, in der Fernmeldevermittlungsstelle VST B zusammengeschalten und nur die Teilverbindung zwischen der Fernmeldevermittlungsstelle VST B und ihres Teilnehmeranschlusses wird ausgelöst.

Für den Fall, daß die Fernmeldevermittlungsstellen VST A und VST C in einer Fernmeldevermittlungsstelle vereint sind, läuft das Verfahren ähnlich wie vorstehend beschrieben ab. Der Verbindungsaufbau der neuen direkten Fernmeldeverbindung geschieht dann nicht zwischen den Fernmeldevermittlungsstellen VST A und VST C, sondern wird in der einen Fernmeldevermittlungsstelle intern abgewickelt und die Nutzkanäle der Teilverbindungen zu den zwei an diese Fernmeldevermittlungsstelle angeschlossenen Teilnehmeranschlüssen werden intern zusammengeschaltet.

## Patentansprüche

1. Verfahren zur Umwandlung einer über ein öffentliches Kommunikationsnetz vermittelten Dreierfernmeldeverbindung zwischen zwei Teilnehmeranschlüssen und einem weiteren Teilnehmeranschluß oder zwischen zwei Teilnehmeranschlüssen und einem Vermittlungsplatz, wobei die Dreierfernmeldeverbindung über die Fernmeldevermittlungsstelle (VST B) führt, an die der weitere Teilnehmeranschluß oder der Vermittlungssplatz angeschlossen ist, in eine Zweierfernmeldeverbindung zwischen den zwei genannten Teilnehmeranschlüssen, **dadurch gekennzeichnet,**
**dass** die Fernmeldevermittlungstelle (VST B), an die der weitere Teilnehmeranschluß oder der Vermittlungsplatz angeschlossen ist, nach Erhalt einer von dem weiteren Teilnehmeranschluß oder vom Vermittlungsplatz stammenden Aufforderung den Aufbau einer neuen direkten Fernmeldeverbindung zwischen den zwei genannten Teilnehmeranschlüssen **dadurch** einleitet, dass die mit dem weiteren Teilnehmeranschluß oder dem Vermittlungsplatz verbundene Fernmeldevermittlungsstelle (VST B) eine der beiden Fernmeldevermittlungsstellen (VST A), an die jeweils die zwei genannten Teilnehmeranschlüsse angeschlossen sind, zum Aufbau der neuen Fernmeldeverbindung entsprechend einer Auswahl auffordert, die in Abhängigkeit von dem der Vergebührung zugrundegelegten Tarifmodell getroffen wird, und
**dass** nach erfolgreichem Aufbau der direkten Fernmeldeverbindung die bestehenden Teilverbindungen der über diese Fernmeldevermittlungsstelle (VST B) führenden Dreierfernmeldeverbindung zwischen diesen beiden Teilnehmeranschlüssen und dem weiteren Teilnehmeranschluß oder dem Vermittlungsplatz abgebaut werden.

2. Verfahren nach Anspruch 1, **dadurch gekennzeichnet, dass** die zwei genannten Teilnehmeranschlüsse, zwischen denen eine neue direkte Fernmeldeverbindung aufgebaut wird, an eine gemeinsame Fernmeldevermittlungsstelle (VST A und VST C) angeschlossen sind.

3. Verfahren nach Anspruch 1 oder 2, **dadurch gekennzeichnet, dass** die zum Aufbau der neuen Fernmeldeverbindung aufgeforderte Fernmeldevermittlungsstelle (VST A) von der die neue Fernmeldeverbindung annehmenden Fernmeldevermittlungsstelle (VST C), an die der zweite Teilnehmeranschluß der zwei genannten Teilnehmeranschlüsse angeschlossen ist, ein eindeutiges Rufkennzeichen und/oder die Rufnummer des zweiten Teilnehmeranschlusses erhält.

## Claims

1. Method whereby a three-party telecommunications connection, conveyed over a public communication network, between two subscriber connections and a further subscriber connection or between two subscriber connections and an operator's position, the said three-party telecommunications connection being routed via the telecommunications exchange (VST B) to which the further subscriber connection or the operator's position is connected, can be converted into a two-party telecommunications connection between the said two subscriber connections, **characterised in that**
when the telecommunications exchange (VST B) to which the further subscriber connection or operator's position is connected receives a request from the further subscriber connection or operator's position, it initiates the establishment of a new direct telecommunications connection between the said two subscriber connections, such that the telecommunications exchange (VST B) connected to the further subscriber connection or operator's position requests one of the two telecommunications exchanges (VST A) to which the said two subscriber connections are respectively connected to establish the new telecommunications connection according to a choice which is made in accordance with the tariff scale on which the call charge is based, and that following successful establishment of the direct telecommunications connection, the existing sub-connections routed through the said telecommunications exchange (VST B) for the three-party telecommunications connection between the said two subscriber connections and the further subscriber connection or operator's position are released.

2. Method according to Claim 1, **characterised in that** the said two subscriber connections between which a new direct telecommunications connection is established, are connected to a common telecommunications exchange (VST A and VST C).

3. Method according to Claim 1 or 2, **characterised in that** the telecommunications exchange (VST A) requested to establish the new telecommunications connection receives from the telecommunications exchange (VST C) accepting the new telecommunications connection, and to which the second subscriber connection of the said two subscriber connections is connected, an unequivocal call indicator and/or the call number of the second subscriber connection.

## Revendications

1. Procédé pour convertir une liaison téléphonique à trois transmise par l'intermédiaire d'un réseau de communication public entre deux raccordements d'abonné et un raccordement d'abonné supplémentaire ou entre deux raccordements d'abonné et un poste d'opératrice, la liaison téléphonique à trois passant par le centre (VST B) de commutation téléphonique auquel est raccordé le raccordement d'abonné supplémentaire ou le poste d'opératrice, en une liaison téléphonique à deux entre les deux raccordements d'abonné précités, **caractérisé en ce que**
le centre (VST B) de commutation téléphonique auquel est raccordé le raccordement d'abonné supplémentaire ou le poste d'opératrice initie, après réception d'une demande provenant du raccordement d'abonné supplémentaire ou du poste d'opératrice, l'établissement d'une nouvelle liaison téléphonique directe entre les deux raccordements d'abonné précités par le fait que le centre (VST B) de commutation téléphonique relié au raccordement d'abonné supplémentaire ou au poste d'opératrice invite l'un des deux centres (VST A) de commutation téléphonique, auxquels sont raccordés, respectivement, les deux raccordements d'abonné précités, à établir la nouvelle liaison téléphonique suivant une sélection qui est prise en fonction du modèle tarifaire à la base de la tarification, et
**en ce que**, après l'établissement couronné de succès de la liaison téléphonique directe, les liaisons partielles restantes de la liaison téléphonique à trois passant par l'intermédiaire de ce centre (VST B) de commutation téléphonique entre ces deux raccordements d'abonné et le raccordement d'abonné supplémentaire ou le poste d'opératrice sont supprimées.

2. Procédé suivant la revendication 1, **caractérisé**
**en ce que** les deux raccordements d'abonné précités entre lesquels est établie une nouvelle liaison téléphonique directe sont raccordés à un centre (VST A et VST C) de commutation téléphonique commun.

3. Procédé suivant la revendication 1 ou 2, **caractérisé**
**en ce que** le centre (VST A) de commutation téléphonique, invité à établir la nouvelle liaison téléphonique, reçoit du centre (VST C) de commutation téléphonique, auquel est raccordé le deuxième raccordement d'abonné des deux raccordements d'abonné précités et prenant la nouvelle liaison téléphonique, un indicateur d'appel univoque et/ou le numéro d'appel du deuxième raccordement d'abonné.
